(19) Europäisches Patentamt
European Patent Office
Office européen des brevets

(11) **EP 1 754 751 A1**

(12) **EUROPEAN PATENT APPLICATION**
published in accordance with Art. 158(3) EPC

(43) Date of publication:
**21.02.2007 Bulletin 2007/08**

(51) Int Cl.:
*C08L 29/04* (2006.01)    *C08K 5/092* (2006.01)
*C08L 57/10* (2006.01)

(21) Application number: **05739363.9**

(22) Date of filing: **16.05.2005**

(86) International application number:
**PCT/JP2005/008885**

(87) International publication number:
**WO 2005/121241 (22.12.2005 Gazette 2005/51)**

(84) Designated Contracting States:
**AT BE BG CH CY CZ DE DK EE ES FI FR GB GR HU IE IS IT LI LT LU MC NL PL PT RO SE SI SK TR**

(30) Priority: **09.06.2004 JP 2004171001**
**21.09.2004 JP 2004272787**

(71) Applicant: **Kuraray Co., Ltd.,**
**Kurashiki Plant**
**Okayama 710-8622 (JP)**

(72) Inventors:
• **TANIMOTO, Seiji**
**Kurashiki-shi,**
**Okayama 710-8622 (JP)**
• **FUJIWARA, Naoki**
**Kurashiki-shi,**
**Okayama 710-8622 (JP)**

(74) Representative: **Tanner, James Percival**
**D Young & Co**
**120 Holborn**
**London EC1N 2DY (GB)**

(54) **AQUEOUS DISPERSION, COMPOSITION AND COATING AGENT FOR PAPER**

(57)    Disclosed is a polyvinyl alcohol aqueous dispersion having excellent storage stabilitywhich is capable of forming a coating film with excellent water resistance and transparency even when it is dried at room temperature. Also disclosed are a composition and a coating agent for paper. Specifically disclosed is an aqueous dispersion of a resin which is composed of a polymer containing at least 20 weight% of a vinyl monomer unit (A) having an epoxy group and a vinyl alcohol polymer (B) while having a weight ratio (A)/(B) of 2/100-200/100. The weight ratio of (A) bonded to (B) is not less than 50% relative to the total weight of (A), and the average particle size of the resin determined by dynamic light scattering is not more than 500 nm.

EP 1 754 751 A1

**Description**

Technical Field

The present invention relates to an aqueous dispersion having a polyvinyl alcohol as a dispersant, composition and coating agent for paper which form a coating film with excellent water resistance and transparency even when dried at room temperature and have excellent storage stability.

Background Art

Conventionally, vinyl alcohol based polymers (hereinafter, the vinyl alcohol based polymer is sometimes abbreviated as PVA) have been widely used as various binders, adhesives and surface treating agents, and have been known to have excellent performances unsurpassed by other water soluble resins in film-forming property and strength. However, PVA has a shortcoming that the water resistance is poor particularly when dried at low temperature because PVA is water soluble, and conventionally, various methods have been studied for improving this shortcoming. For example, the methods of crosslinking PVA with glyoxal, glutaraldehyde, dialdehyde starch, a water-soluble epoxy compound or a methylol compound have been known. However, in order to make PVA sufficiently water resistant by this method, it is necessary to treat PVA with heat at a high temperature of 100˚C and particularly 120˚C for a long time. In order to make PVA water resistant by drying at low temperature, the method for using a strong acidic condition such as pH 2 or below has also been known, but in this case, viscosity stability of a PVA aqueous solution is poor, and the method is problematic in that PVA is gelated in use and its water resistance is insufficient. Furthermore, the method for crosslinking carboxyl group-containing PVA with a polyamide epichlorohydrin resin, and the method for crosslinking with acetoacetyl group-containing PVA with a polyvalent aldehyde compound such as glyoxal have also been known, but these methods are problematic in that the water resistance is insufficient and the viscosity stability of the PVA aqueous solution is poor.

An emulsion adhesive obtained by combining PVA with a polymer emulsion containing 0.5 to 10 weight% of a vinyl monomer unit having an epoxy group has also been known (Patent Document 1), but the content of the vinyl monomer unit having the epoxy group is small in this emulsion adhesive, and as shown in Comparative Example 6 described later, when dried at room temperature, it is not possible to impart the sufficient water resistance and transparency.

An aqueous adhesive using PVA as an emulsifier and a vinyl acetate based polymer containing 0.3 to 5 weight% of the vinyl monomer unit having the epoxy group as a dispersoid has also been known (Patent Document 2), but the content of the vinyl monomer unit having the epoxy group is also small in this aqueous adhesive, and as shown in Comparative Example 7 described later, when dried at room temperature, it is not possible to impart the sufficient water resistance and the transparency is poor.

An emulsion obtained by reacting PVA having a functional group such as the carboxyl group with an epoxy resin in an aqueous medium (Patent Document 3) and an aqueous coating agent obtained by combining a water resistant additive with this emulsion (Patent Document 4) have also been known, but the amount of the epoxy resin used here is 500 to 50000 parts by weight based on 100 parts by weight of PVA, which is a large amount, and thus, as shown in Comparative Example 8, it is not possible to impart the sufficient storage stability and the transparency is poor.

A composition obtained by combining an epoxy compound with an aqueous emulsion using PVA as the emulsifier has also been known (Patent Document 5), but as shown in Comparative Example 9, in this emulsion, the amount of the epoxy compound used is large and further a weight percentage of the epoxy compound bound to PVA is less than 50 weight% based on a total weight of the epoxy compound, and thus, when dried at room temperature, it is not possible to impart the sufficient water resistance and storage stability, and the transparency is also poor.

Conventionally, PVA has been widely used as clear coating agents and pigment coating agents in order to improve surface properties such as enhancements of surface strength, smoothness, gloss, gas barrier property, water resistance, printing suitability and solvent resistance of papers. PVA has been known to have excellent performances unsurpassed by the other resins in film-forming property and strength. Recently, PVA which further enhances the surface properties of paper such as water resistance has been required under a lowering tendency of the surface strength due to increase of a wood percentage from southern regions in pulp raw materials and a percentage of recycled waste papers or a speeding up tendency of printing speed. Also concerning barrier paper which has been greatly advanced recently, PVA capable of imparting higher barrier property has been required, and concerning offset printing which uses water, PVA having the higher water resistance strength has been required. However, conventional PVA cannot sufficiently satisfy these requests. For these problems, the method for using modified PVA obtained by introducing 1 to 10 mol% of an $\alpha$-olefin unit having 4 or less carbons has been disclosed (Patent Document 6 and 7), but practically its effect is not sufficient and the method is problematic in that solubility in water of the modified PVA is inferior. For these requests, a coating agent for paper composed of a vinyl alcohol based polymer having an amino group bound to a phenyl group and a water resistant additive has been proposed (Patent Document 8), and it has become possible to satisfy both the solubility in water and the water resistance after being coated on the paper. However, it has been revealed to have a shortcoming that coloration with time occurs in a state of an aqueous solution or a coating film because the vinyl alcohol based polymer has the amino group bound to the phenyl group, and it has been found that the coating agent cannot be used for intended use which requires weather resistance for a long time. In order to prevent the coloration with time, PVA containing an amino group has been proposed (Patent Document 9), but there was a drawback that the coating film was slightly yellowed, which was a problem that the PVA could not be applied depending on the intended use, and shelf stability could not be satisfied.

Patent Document 1: Japanese Published Unexamined Patent Application No. H08-48958 (Claims)
Patent Document 2: Japanese Published Unexamined Patent Application No. H10-36801 (Claims, [0008], and [0013])
Patent Document 3: Japanese Published Unexamined Patent Application No. 2000-239350 (Claims and [0012])
Patent Document 4: Japanese Published Unexamined Patent Application No. 2000-290538 (Claims and [0012])
Patent Document 5: Japanese Published Unexamined Patent Application No. H10-219068 (Claim and [0024])
Patent Document 6: Japanese Published Unexamined Patent Application No. S63-112794 (Claims)
Patent Document 7: Japanese Published Unexamined Patent Application No. S63-85198 (Claims)
Patent Document 8: J Japanese Published Unexamined Patent Application No. H10-251992 (Claims)
Patent Document 9: Japanese Published Unexamined Patent Application No. 2003-253592 (Claims)

Disclosure of the Invention

Problems to be Solved by the Invention

The present invention has solved the shortcomings in the above conventional art, and aims at providing an aqueous dispersion having a PVA as a dispersant, a composition and a coating agent for paper, which form coating films excellent in water resistance and transparency even when dried at room temperature and are excellent in storage stability.

Means for Solving the Problems

The above object is accomplished by providing an aqueous dispersion of a resin which is composed of a polymer containing at least 20 weight% of a vinyl monomer unit (A) having an epoxy group and a vinyl alcohol based monomer (B) and in which a weight ratio (A)/(B) is 2/100 to 200/100, a weight percentage of (A) bound to (B) is 50% or more based on a total weight of (A) and an average particle diameter by a dynamic light scattering method is 500 nm or less, or resin powder obtained by drying the above aqueous dispersion.

The above object is also accomplished suitably by providing a composition obtained by combining a water resistant additive with the above aqueous dispersion or the resin powder obtained by drying the above aqueous dispersion.

The above object is accomplished by providing a coating agent for paper composed of the composition obtained by combining the water resistant additive with the above aqueous dispersion or an aqueous redispersion of the resin powder obtained by drying the above aqueous dispersion.

Effects of the Invention

According to the present invention, it is possible to obtain the aqueous dispersion or an aqueous redispersion which forms the coating film excellent in water resistance and transparency even when dried at room temperature and is also excellent in storage stability. By containing the water resistant additive, it is possible to further enhance the water resistance and the storage stability. Also, the above aqueous dispersion or aqueous redispersion is particularly useful as the coating agent for paper, particularly the coating agent for thermosensitive paper. Best Modes for Carrying Out the Invention

In the present invention, vinyl monomers having the epoxy group include allyl glycidyl ether, methallyl glycidyl ether, 1,2-epoxy-5-hexene, 1,2-epoxy-7-octene, 1,2-epoxy-9-decene, 8-hydroxy-6,7-epoxy-1-octene, 8-acetoxy-6,7-epoxy-1-octene, N-(2,3-epoxy)propylacrylamide, N-(2,3-epoxy)propylmethacrylamide, 4-acrylamidephenylglycidyl ether, 3-acrylamidephenylglycidyl ether, 4-methacrylamidephenylglycidyl ether, 3-methacrylamidephenylglycidyl ether, N-glycidoxymethylacrylamide, N-glycidoxymethylmethacrylamide,N-glycidoxyethylacrylamide, N-glycidoxyethylmethacrylamide, N-glycidoxypropylacrylamide, N-glycidoxypropylmethacrylamide, N-glycidoxybutylacrylamide, N-glycidoxybutylmethacrylamide, 4-acrylamidemethyl-2,5-dimethyl-phenylglycidyl ether, 4-methacrylamidemethyl-2,5-dimethyl-phenylglycidyl ether, acrylamidepropyldimethyl(2,3-epoxy)propylammonium chloride, methacrylamidepropyldimethyl(2,3-epoxy)propylammonium chloride and glycidyl methacrylate. In particular, glycidyl methacrylate is preferably used.

In the present invention, it is important to use a polymer (C) containing the vinyl monomer unit (A) having the above epoxy group at least at 20 weight% based on the total monomers. When the content of the vinyl monomer unit having the epoxy group is less than 20 weight%, the objective coating film excellent in water resistance and transparency when dried at room temperature is not obtained and the aqueous dispersion excellent in storage stability cannot be obtained. The content of the vinyl monomer unit (A) having the epoxy group is suitably 50 to 100 weight%, and optimally 80 to 100 weight%. The monomer which is copolymerized with the vinyl monomer having the epoxy group is not particularly limited as long as it copolymerizes with the vinyl monomer having the epoxy group, and includes $\alpha$-olefin such as ethylene, propylene, n-butene and isobutylene, acrylic acid and salts thereof, acrylate esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate and octadecyl acrylate, methacrylic acid and salts thereof, methacrylate esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate and octadecyl methacrylate, acrylamide derivatives such as acrylamide, N-methylacrylamide, N-ethylacrylamide, N,N-dimethylacrylamide, diacetone acrylamide, acrylamide propanesulfonic acid and salts thereof , acrylamide propyldimethylamine and salts or quaternary salts thereof and N-methylolacrylamide and derivative thereof, methacrylamide derivatives such as methacrylamide, N-methylmethacrylamide, N-ethylmethacrylamide, methacrylamide propanesulfonic acid and salts thereof, methacrylamide propyldimethylamine and salts or quaternary salts thereof and N-methylolmethacrylamide and derivative thereof, vinyl esters such as vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate and vinyl benzoate, vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether and stearyl vinyl ether, nitriles such as acrylonitrile and methacrylonitrile, vinyl halides such as vinyl chloride and vinyl fluoride, vinylidene halides such as vinylidene chloride and vinylidene fluoride, allyl compounds such as allyl acetate and allyl chloride, maleic acid or esters or anhydrides thereof, vinylsilyl compounds such as vinyltrimethoxysilane, and isopropenyl acetate.

A saponification degree of PVA (B) used for the present invention is not particularly limited, and is preferably 50 mol% or more, more preferably 60 mol% or more and optimally 70 mol% or more for accomplishing the object of the invention. When the saponification degree is too low, it is likely that the water solubility which is an inherent property of PVA is lowered. A polymerization degree of PVA (B) is not particularly limited, and preferably 100 to 8000, more preferably 200 to 3000 and optimally 250 to 2500 for accomplishing the object of the invention. When the polymerization degree is too small, it is likely that a function of PVA as a dispersion stabilizer is not sufficiently exerted.

In the present invention, PVA (B) can be obtained by polymerizing a vinyl ester based monomer and saponifying the resulting polymer. As a method for polymerizing the vinyl ester based monomer, methods known conventionally and publicly such as a solution polymerization method, mass polymerization method, a suspension polymerization method and an emulsion polymerization method can be applied. As a polymerization catalyst, an azo based catalyst, a peroxide based catalyst or a redox based catalyst is optionally selected depending on the polymerization method. Alcoholysis or hydrolysis using an alkali catalyst or an acid catalyst known conventionally and publicly can be applied to a saponification reaction. Among them, the saponification reaction using methanol as a solvent and using a caustic soda (NaOH) catalyst is simple and the most preferable.

Examples of the vinyl ester based monomer include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate and vinyl benzoate, and in particular, vinyl acetate is preferable.

PVA (B) used in the present invention may contain another monomer unit within the range where a gist of the invention is not impaired. Such monomers include those exemplified above as the monomer which copolymerizes with the vinyl monomer having the epoxy group, for example, $\alpha$-olefin.

It is one of the preferable embodiments to use, as PVA (B), the vinyl alcohol based polymer (sometimes abbreviated as $\alpha$-olefin modified PVA) containing 1 to 20 mol% of an $\alpha$-olefin unit having 4 or less carbons in a molecule. By the use of the PVA, the water resistance is further enhanced. The $\alpha$-olefin modified PVA can be obtained by saponifying a copolymer of vinyl ester and $\alpha$-olefin having 4 or less carbons. Here, the $\alpha$-olefin unit having 4 or less carbons includes ethylene, propylene, butylene and isobutylene units, and the ethylene unit is preferably used.

The content of the $\alpha$-olefin unit typified by the ethylene unit is suitably 1 to 20 mol%, more preferably 1.5 mol% or more and still more preferably 2 mol% or more, and preferably 15 mol% or less and more preferably 12 mol% or less. When the amount of the $\alpha$-olefin unit typified by the ethylene unit falls into this range, it is possible to impart a more excellent water resistance.

As PVA containing 1 to 20 mol% of the $\alpha$-olefin unit, the vinyl alcohol based polymer having 1,2-glycol bonds at (1.7-X/40) mol% or more when the $\alpha$-olefin unit is X mol% is one of the preferable embodiments. By the use of this polymer, the particle diameters of the resulting aqueous dispersion having a PVA as a dispersant become small, which is preferable.

The method for producing this polymer includes a method for copolymerizing vinylene carbonate with vinyl ester and ethylene such that the amount of 1,2-glycol bonds is a value within the above range, followed by saponifying, and a method for copolymerizing at higher temperatures such as 75 to 200˚C than a usual condition under application of pressure when ethylene and the vinyl ester based monomer are copolymerized, followed by saponifying. In the latter method, a polymerization temperature is preferably 95 to 190˚C and more preferably 100 to 160˚C.

In this case, the content of the 1,2-glycol bonds is preferably (1.7 - X/40) mol% or more, more preferably (1.75 - X/40) mol% or more, still more preferably (1.8 - X/40) mol% or more and optimally (1.9 - X/40) mol% or more. The content of the 1,2-glycol bonds is preferably 4 mol% or less, more preferably 3.5 mol% or less and optimally 3.2 mol% or less. The content of the 1,2-glycol bonds is calculated from analysis of an NMR spectrum.

Furthermore, in the present invention, it is one of the preferable embodiments to use PVA having the 1,2-glycol bonds at 1.9 mol% or more (sometimes abbreviated as high 1,2-glycol bond-containing PVA) as PVA (B). By the use of the PVA, the percentage of the vinyl monomer unit (A) having the epoxy group bound to PVA (B) is increased.

The method for producing such PVA having a high content of the 1,2-glycol bonds is not particularly limited, and the publicly known methods can be used. Examples thereof include a method for copolymerizing vinylene carbonate with vinyl ester such that the amount of the 1, 2-glycol bonds is the value within the above range and a method for polymerizing vinyl ester at higher temperatures such as 75 to 200˚C than the usual condition under application of pressure. In the latter method, the polymerization temperature is preferably 95 to 190˚C and in particular, preferably 100 to 180˚C. As the condition for applying the pressure, it is important to select so that the temperature in a polymerization system is a boiling point or below. The pressure is suitably 0.2 MPa or more and more suitably 0.3 MPa or more. An upper limit thereof is suitably 5 MPa or less and more suitably 3 MPa or less. The above polymerization can be performed by any of the mass polymerization method, the solution polymerization method, the suspension polymerization method and the emulsion polymerization method in the presence of a radical polymerization initiator, and the solution polymerization, particularly the solution polymerization method using methanol as the solvent is suitable. PVA having a high content of the 1,2-glycol bonds is obtained by saponifying the vinyl ester polymer obtained in this way by a usual method. The content of the 1,2-glycol bonds in PVA is suitably 1.9 mol% or more, more preferably 1.95 mol% or more, still more preferably 2.0 mol% or more and optimally 2.1 mol% or more. The content of the 1,2-glycol bonds is preferably 4 mol% or less, more preferably 3.5 mol% or less and optimally 3.2 mol% or less. Here, the content of the 1,2-glycol bonds is calculated from the analysis of an NMR spectrum.

In the present invention, it is important that the weight ratio (A)/(B) of the vinyl monomer unit (A) having the epoxy group to PVA (B) in the polymer (C) is 2/100 to 200/100, and the weight ratio is more preferably 3/100 to 180/100 and optimally 7/100 to 70/100. When the weight ratio (A)/(B) is too small, it is not possible to sufficiently impart the water resistance. Meanwhile, when the weight ratio (A)/(B) of (A) to (B) is too large, the storage stability of the resulting aqueous dispersion having a PVA as a dispersant is lowered. The weight ratio (C)/(A) of the polymer (C) to PVA (B) is not particularly limited, and it is suitable to select from the range of 2/100 to 300/100.

In the present invention, it is important that the percentage of the vinyl monomer unit (A) having the epoxy group, which has been bound to PVA (B) in the polymer (C) [weight percentage of (A) bound to (B) based on the total weight of (A)] (hereinafter, represented by a binding percentage of (A)) is 50% or more, and the binding percentage of (A) is preferably 60% or more, more preferably 70% or more and optimally 80% or more. When the binding percentage of (A) satisfies this range, it is possible to impart the excellent water resistance, transparency and storage stability. Here, the binding percentage of the vinyl monomer unit (A) having the epoxy group in the polymer (C) is measured by the method described in Example 1 described later.

It is important that the particle diameter of the resin in the aqueous dispersion of the present invention is 500 nm or less as a measurement value by the dynamic light scattering method, and the particle diameter is preferably 400 nm or less, more preferably 300 nm or less and optimally 200 nm or less. When the average particle diameter exceeds 500 nm, the water resistance is not sufficiently imparted and it is likely to lower the storage stability. A lower limit is not particularly limited, and 20 nm or more, and further 50 nm or more are suitable. The measurement by the dynamic light scattering method can be performed using a laser zeta-potential electrometer ELS-8000 manufactured by Otsuka Electronics Co. , Ltd. , or the like. The particle diameter of the resin in the aqueous dispersion is adjusted by optionally selecting the weight ratio of (A) to (B) and conditions for producing the aqueous dispersion (polymerization temperature, polymerization time period, monomers, polymerization initiator, timing when a dispersant is added, amount of a chain transfer agent to be used, and the like).

The method for producing the aqueous dispersion of the present invention is not particularly limited, and for example, the method in which using an aqueous solution of PVA (B) as a dispersant, the vinyl monomer having the epoxy group is temporarily or continuously added, polymerization initiator, for example, a peroxide based polymerization initiator such as hydrogen peroxide, ammonium persulfate and potassium persulfate is added, and emulsion polymerization is performed is included. The above polymerization initiator is used in a redox system by combining a reducing agent in some cases. In that case, typically hydrogen peroxide is used with tartaric acid, sodium tartrate, L-ascorbic acid or Rongalite. Also, ammonium persulfate and potassium persulfate are used with sodium hydrogen sulfite or sodium hydrogen carbonate. Among them, when hydrogen peroxide is used, the above binding percentage of (A) is increased, and thus, hydrogen peroxide is suitably used.

The aqueous dispersion obtained in this way can be directlyused after the polymerization, or can be dried, suitably spray-dried to make powder, which can be directly used, or used by re-emulsifying at the point of use. The powder obtained by drying has no blocking of powders with one another, and is excellent in redispersibility because no aggregation is observed when re-emulsified. A usual spray-drying in which a fluid is sprayed to dry can be used for the spray-drying. Forms for the spray include a disc type, a nozzle type and an shock wave type, and any of the types may be used. As a heat source, hot air and heated water vapor are used. A drying condition may be optionally selected depending on a type and a size of a spray drier, a concentration, a viscosity and a flow of the aqueous resin dispersion. The drying temperature is appropriately 100 to 150˚C. It is desirable to set up the other drying conditions so that the sufficiently dried powder is obtained within this range of the drying temperature.

In the present invention, it is one of the preferable embodiments to use as a composition by combining a water resistant additive (b) with the above aqueous dispersion (or the dried power) (a). By use of the water resistant additive, it becomes possible to further enhance the water resistance.

The water resistant additive (b) is not particularly limited, and is at least one curing agent selected from an amine compound, a thiol compound, dicyandiamide, an acid anhydride, imidazoles and a polyvalent carboxylic acid. Among them, the polyvalent carboxylic acid is suitably used in light of safety.

The amine compounds include polyamine based curing agents such as aliphatic polyamines such as ethylenediamine, 1,2-propylenediamine, 1,3-propylenediamine, 1,4-butylenediamine, hexamethylenediamine, 2,4,4-trimethylhexamethylenediamine, diethylenetriamine, dipropylenetriamine, triethylenetriamine, tetraethylenepentamine, dipropylenetriamine, dimethylaminopropylamine and diethylaminopropylamine, alicyclic polyamines such as menthenediamine, 1,3-bis(aminomethyl)cyclohexane, isophoronediamine, N-3-aminopropylcyclohexylamine, 1,4-diaminocyclohexane, 2,4-diaminocyclohexane, bis(aminocyclohexyl)methane, 1,3-bis(aminocyclohexylpropane), bis(3-methyl-4-aminocyclohexyl)methane and 1,4-bis(ethylamino)cyclohexane, aromatic polyamines such as m-xylylenediamine, p-xylylenediamine, 4-(1-aminoethyl)aniline, methaphenylenediamine, diaminodiphenylmethane, diaminodiphenylsulfone, bis(3-ethyl-4-amino-5-methylphenylmethane) and 1,4-bis[2-(3,5-dimethyl-4-aminophenyl)propyl]benzene, heterocyclic polyamines such as N-aminoethylpiperazine and 1,4-bis(3-aminopropyl)piperazine, as well as polyamide-polyamine curing agents obtained by reacting dicarboxylic acid such as dimer acid with these polyamines by the usual method.

As the amine compound, tertiary amine can also be used. Tertiary amine is not particularly limited, and primarily includes tris(dimethylaminomethyl)phenol, dimethylbenzylamine and 1,8-diazabicyclo(5,4,0)undecane.
The thiol compound is not particularly limited as long as the compound has two or more mercapto groups. Such a compound includes Capcure 3-800 (brand name), Capcure WR-6 (brand name), Epomate QX11 (brand name) and Epomate QX-40 (brand name) manufactured by Yuka Shell Epoxy Co., Ltd., as well as Adeka Hardener EH316 (brand name) and Adeka Hardener EH317 (brand name) manufactured by Asahi Denka Co., Ltd.

The acid anhydride includes aliphatic acid anhydride such as dodecenyl succinic anhydride, polyadipic anhydride, polyazelaic anhydride, polysebacic anhydride, poly(ethyloctadecanedioic) anhydride and poly(phenylhexadecanedioic) anhydride, alicyclic acid anhydride such as methyltetrahydrophthalic anhydride, methylhexahydrophthalic anhydride, methylhymic anhydride, hexahydrophthalic anhydride, tetrahydrophthalic anhydride, trialkyl tetrahydrophthalic anhydride and methylcyclohexenedicarboxylic anhydride, and aromatic acid anhydride such as phthalic anhydride, trimellitic anhydride, pyromellitic anhydride, benzophenonetetracarboxylic anhydride, ethylene glycol bistrimellitate and glycerol tristrimellitate.

The imidazole compounds are not particularly limited, and include 2-methylimidazole, 2-ethyl-4-methylimidazole and 2-phenylimidazole.

The polyvalent carboxylic acids include tartaric acid, citric acid, erythorbic acid, L-ascorbic acid, lactic acid, gluconic acid and DL-malic acid, and tartaric acid and citric acid are preferably used.

A mixing ratio by weight [(a)/(b)] (in terms of solid content) of the aqueous dispersion (a) to the water resistant additive (b) is not particularly limited, and is typically 99.9/0.1 to 50/50 and preferably 99.5/0.5 to 70/30. When (a)/(b) is more than 99.9/0.1, the water resistance is not enhanced in some cases whereas when it is less than 50/50, it is likely that the storage stability of the composition is lowered.

If necessary, solvents, various additives, other water soluble resins or macromolecular aqueous dispersions can be contained in the aqueous dispersion or the composition of the present invention. As the solvent, water is preferably used, and the solvents such as various alcohols, ketone, dimethylformamide and dimethylsulfoxide can be combined therewith. The additives include various anti-foaming agents, various dispersants, nonionic or anionic surfactants, silane coupling agents, pH adjusters or fillers such as calcium carbide, pigments, talc and wheat. The water soluble resins include cellulose derivatives such as carboxymethylcellulose, hydroxyethylcellulose, (meth)acrylic polymers such as poly(meth)acrylic acid, polyhydroxy(meth)acrylate or copolymers thereof and polyacrylamide, and polyvinylpyrrolidone or copolymers thereof. The macromolecular aqueous dispersions include aqueous dispersions of acryl polymers and copolymers, ethylene-vinyl acetate copolymer, vinyl ester based polymers, vinyl ester-ethylene copolymer, vinyl ester-acrylic ester copolymer, styrene-butadiene copolymer and the like.

The above pigments include clay, kaolin, calcium carbonate, titanium white and satin white. As the dispersant for these pigments, sodium pyrophosphate, sodium hexametaphosphate and sodium polyacrylate can also be used.

When the aqueous dispersion of the present invention is used for the coating agent for paper, the other binder such as starch, modified starch and casein, or the foregoing macromolecular aqueous dispersion can also be combined as needed.

The coating agent for paper is applied onto a paper surface using a publicly known coater such as an air knife coater, a blade coater, a roll coater and a size press coater, and dried in a drying step followed by being finished through a supercalender. Application covers a wide range depending on the purpose, and an applied amount is not particularly limited and is typically about 0.1 to 30 g/m$^2$ in terms of solid content. The drying step can be performed at either low temperature or high temperature, and at low temperature, e.g., 50°C or below, 40°C or below in particular, or even at room temperature, it is possible to sufficiently impart the water resistance.

The paper on which the coating agent for paper is applied is not particularly limited, and for example, paperboards such as manila board, white board and liner board, common high quality paper, medium quality paper, photogravure paper and other printing papers are suitable.

The present invention will be described in more detail below with reference to Examples, but the invention is not limited to these Examples. In the following Examples, "%" and "parts" mean "weight%" and "parts by weight" respectively, unless otherwise specified.

Example 1

Into a 2-liter glass polymerization vessel equipped with a reflux condenser, a thermometer and a nitrogen inlet port, 900 g of ion-exchanged water and 100 g of PVA-1 (polymerization degree: 1700, saponification degree: 98.5 mol%, PVA-117 manufactured by Kuraray Co. , Ltd.) were placed and completely dissolved at 95°C. Then, this PVA aqueous solution was cooled followed by performing nitrogen substitution, and after adjusting to 60°C, 25 g of glycidyl methacrylate and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion of a resin with 11. 96% solid content (polymerization rate of glycidyl methacrylate: 99.7%) was obtained. The resulting aqueous dispersion was evaluated by the following methods.

(1) Water resistance of coating film
The aqueous dispersion was flow-cast on polyethylene terephthalate (hereinafter, abbreviated as PET) film at 20°C and 65% RH, and dried at room temperature for 7 days to afford a dried coating film with 500 $\mu$m. A sample with a diameter of 2.5 cm was cut out from this coating film. A water absorption rate and an elution rate of the coating film were calculated when the sample had been immersed in water at 20°C for 24 hours.

$$\text{Water absorption rate (\%)} = \{(\text{Coating film water absorption weight after immersion}/\text{Coating film absolute dry weight before immersion}) - 1\} \times 100$$

$$\text{Elution rate (\%)} = \{1 - (\text{Coating film absolute dry weight after immersion}/\text{Coating film absolute dry weight before immersion})\} \times 100$$

*Coating film absolute dry weight before immersion: Coating film weight (containing water) before immersion - {Coating film weight (containing water) before immersion $\times$ Coating film water content (%)/100}
*Coating film water content: The water containing rate is previously calculated by absolutely drying the coating film (separate sample from the sample to be immersed in water at 20°C) at 105°C for 4 hours.
*Coating film absolute dry weight after immersion: Weight obtained by absolutely drying the coating film after immersion at 105˚C for 4 hours.
*Coating film water absorption weight after immersion: Weight by weighing the coating film after the coating film after immersion was picked up from the water and the water adhered to the coating film was wiped with gauze.

(2) Storage stability
The aqueous dispersion was left as it is at 40˚C for one week, then viscosity changes were visually observed, and evaluated by the following criteria.
○: No change, △: Slightly increased viscosity with fluidity, and ×: Gelation
(3) Measurement of particle diameter
The aqueous dispersion was diluted to 0.05% with ion-exchanged water, and DLS average particle diameter was measured using ELS-8000 manufactured by Otsuka Electronics Co., Ltd.
(4) Binding percentage of vinyl monomer unit (A) having epoxy group
The aqueous dispersion was flow-cast on the PET film at 20˚C and 65% RH, and dried for 7 days to afford a dried coating film with a thickness of 500 μm. A sample with a diameter of 2.5 cm was cut out from this coating film. The sample was subjected to Soxhlet extraction with acetone for 24 hours, and the binding percentage of (A) was calculated from the extract. Binding percentage (%) of (A) = {1 - (Absolute dry weight of extract/Total weight of (A) in coating film)} × 100 Absolute dry weight of extract: Weight obtained by absolutely drying the extract at 105˚C for 4 hours.
(5) Transparency
The aqueous dispersion was flow-cast on the PET film at 20˚C and 65% RH, and dried for 7 days to afford a dried coating film with a thickness of 500 μm. The transparency of the coating film was visually evaluated by the following criteria.
○: Transparence, △: Slight white turbidity, and ×: White turbidity

Example 2

An aqueous dispersion with solid content of 11.95% was obtained in the same way as in Example 1 except that PVA-2 (polymerization degree: 1700, saponification degree: 98 mol%, ethylene content: 5 mol%) was used in place of PVA-1 used in Example 1.

Example 3

An aqueous dispersion with solid content of 11.9% was obtained in the same way as in Example 1 except that PVA-3 (polymerization degree: 1000, saponification degree: 99.2 mol%, ethylene content: 7 mol%) was used in place of PVA-1 used in Example 1.

Comparative Example 1

The aqueous solution of PVA-1 used in Example 1 was evaluated as it is.

Comparative Example 2

The aqueous solution of PVA-3 used in Example 3 was evaluated as it is.

Example 4

Into a 2-liter glass polymerization vessel equipped with a reflux condenser, a thermometer and a nitrogen inlet port, 900 g of ion-exchanged water and 100 g of PVA-4 (polymerization degree: 1700, saponification degree: 88 mol%, PVA-217 manufactured by Kuraray Co., Ltd.) were placed and completely dissolved at 95˚C. Then, this PVA aqueous solution was cooled followed by performing nitrogen substitution, and after adjusting to 60˚C, 50 g of glycidyl methacrylate and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 14.8% solid content was obtained. To 100 g solid content of the resulting aqueous dispersion, 100 g of an aqueous solution of 20% tartaric acid as a water resistant additive was added to prepare a composition. The composition was evaluated in the same way as in Example 1, and results are collectively shown in Table 1.

Example 5

Into a 2-liter glass polymerization vessel equipped with a reflux condenser, a thermometer and a nitrogen inlet port, 1850 g of ion-exchanged water and 100 g of PVA-4 were placed and completely dissolved at 95˚C. Then, this PVA aqueous solution was cooled followed by performing nitrogen substitution, and after adjusting to 60˚C, 150 g of glycidyl methacrylate and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours , an aqueous dispersion with 12.5% solid content was obtained. To 100 g solid content of the resulting aqueous dispersion, 100 g of an aqueous solution of 20% tartaric acid as the water resistant additive was added to prepare a composition. The composition was evaluated in the same way as in Example 1, and results are collectively shown in Table 1.

Comparative Example 3

Into a 2-liter glass polymerization vessel equipped with a reflux condenser, a thermometer and a nitrogen inlet port, 2900 g of ion-exchanged water and 100 g of PVA-4 were placed and completely dissolved at 95˚C. Then, this PVA aqueous solution was cooled followed by performing nitrogen substitution, and after adjusting to 60˚C, 500 g of glycidyl methacrylate and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours , an aqueous dispersion with 19.7% solid content was obtained. To 100 g solid content of the resulting aqueous dispersion, 100 g of an aqueous solution of 20% tartaric acid as the water resistant additive was added to prepare a composition. The composition was evaluated in the same way as in Example 1, and results are collectively shown in Table 1.

Comparative Example 4

Into a 2-liter glass polymerization vessel equipped with a reflux condenser, a thermometer and a nitrogen inlet port, 2250 g of ion-exchanged water and 100 g of PVA-1 were placed and completely dissolved at 95˚C. Then, this PVA aqueous solution was cooled followed by performing nitrogen substitution, and after adjusting to 60˚C, 250 g of glycidyl methacrylate and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours , an aqueous dispersion with 14.6% solid content was obtained. To 100 g solid content of the resulting aqueous dispersion, 100 g of an aqueous solution of 20% tartaric acid as the water resistant additive was added to prepare a composition. The composition was evaluated in the same way as in Example 1, and results are collectively shown in Table 1.

Comparative Example 5

Into a 2-liter glass polymerization vessel equipped with a reflux condenser, a thermometer and a nitrogen inlet port, 2900 g of ion-exchanged water and 100 g of PVA-4 were placed and completely dissolved at 95˚C. Then, this PVA aqueous solution was cooled followed by performing nitrogen substitution, and after adjusting to 60˚C, 500 g of glycidyl methacrylate, 2.5 g of lauryl mercaptan and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 19.6% solid content was obtained. To 100 g solid content of the resulting aqueous dispersion, 100 g of an aqueous solution of 20% tartaric acid as the water resistant additive was added to prepare a composition. The composition was evaluated in the same way as in Example 1, and the results are collectively shown in Table 1.

Example 6

The evaluation was performed in the same way as in Example 4 except that the same amount of ethylenediamine was used in place of tartaric acid used in Example 4. The results are collectively shown in Table 1.

Example 7

Into a 2-liter glass polymerization vessel equipped with a reflux condenser, a thermometer and a nitrogen inlet port, 900 g of ion-exchanged water and 100 g of PVA-5 (polymerization degree: 1700, saponification degree: 98 mol%, 1, 2-glycol bond amount: 2.2 mol%) were placed and completely dissolved at 95˚C. Then, this PVA aqueous solution was cooled followed by performing nitrogen substitution, and after adjusting to 60˚C, 50 g of glycidyl methacrylate and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 14.8% solid content was obtained. To 100 g solid content of the resulting aqueous dispersion, 100 g of an aqueous solution of 20% tartaric acid as a water resistant additive was added to prepare a composition. The composition was evaluated in the same way as in Example 1, and the results are collectively shown in Table 1.

Example 8

The aqueous dispersion obtained in Example 1 was dried by spraying in hot air at 120˚C to afford resin powder with an average particle diameter of 20 μm. No blocking of the resulting powder with one another was observed. The powder was dispersed again in water at a concentration of 10%, no aggregation was observed and redispersibility was excellent. The resulting redispersion was evaluated in the same way as in Example 1, and the results are collectively shown in Table 1.

Comparative Example 6

Into a 10-liter autoclave, 350 g of an aqueous solution of 25% PVA-6 (polymerization degree: 500, saponification degree: 88 mol%, PVA-205 manufactured by Kuraray Co., Ltd.), 721 g of an aqueous solution of 10% PVA-4, 16.1 g of an aqueous solution of 70% alkylallylpolyethylene oxide (ethylene oxide 40 mol), 4.2 g of an aqueous solution of 30% sodium acetate salt, 7.5 g of an aqueous solution of 1% ferrous sulfate, 2 g of sodium formaldehydesulfoxylate and 400 g of water were added, and pH was adjusted to 5 using diluted phosphoric acid. After performing nitrogen substitution, 2660 g of vinyl acetate was added to the reaction vessel. Pressure was then applied with ethylene to the reaction vessel at 47.7 kg/cm$^2$, and equilibrated at 50˚C for 15 minutes. Subsequently, the polymerization was started by adding an aqueous solution in which 15 g of tert-butylhydroperoxide had been dissolved in 250 g of water and an aqueous solution in which 10 g of ascorbic acid had been dissolved in 250 g of water over 3.5 hours. Subsequently, an emulsified premix including 700 g of water, 50 g of the aqueous solution of 25% PVA-6, 100 g of the aqueous solution of 10% PVA-4, 5.4 g of the aqueous solution of 70% alkylallylpolyethylene oxide (ethylene oxide 40 mol%), 1140 g of vinyl acetate, 76 g of N-vinylformaldehyde, 76 g of glycidyl methacrylate, 76 g of acrylic acid and 76 g of butyl acrylate was added together with an initiator over 3 hours. An inner temperature was adjusted at 75˚C to perform the polymerization, the pressure with ethylene was elevated to 84 kg/m$^2$ and kept for 2 hours. After adding the initiator, the mixture was transferred to a 30-liter vessel, and unreacted ethylene was removed under reduced pressure. The content of glycidyl methacrylate unit (A) in the resulting polymer was 1.5 weight%. The evaluation was performed in the same way as in Example 1, and the results are collectively shown in Table 1.

Comparative Example 7

Into a four-necked flask equipped with a thermometer, a stirrer, a condenser and a dropping funnel, 429.6 g of deionized water and 17 g of PVA-4 were placed at room temperature and dissolved at 80˚C over 2 hours. Subsequently, the temperature was cooled to 70˚C, and mixed monomer of 52.4 g of vinyl acetate and 1 g of glycidyl methacrylate, and 0.1 g of potassium persulfate were added. An emulsion was obtained by raising the temperature to 80˚C, dripping mixed monomer of 472 g of vinyl acetate and 9 g of glycidyl methacrylate, and 30 g of deionized water and an aqueous solution of 9 g of potassium persulfate over 3 hours, further keeping at 80˚C for 2 hours and cooling to the room temperature. The content of glycidyl methacrylate unit (A) in the resulting polymer was 1.8 weight%. The emulsion was evaluated in the same way as in Example 1, and the results are collectively shown in Table 1.

Comparative Example 8

An epoxy resin emulsion was obtained by adding 100 g of bisphenol A type epoxy resin (Epikote 828 manufactured by Yuka Shell Epoxy) to emulsify while strongly stirring 100 g of an aqueous solution of 5% amino group-containing polyvinyl alcohol (polyvinyl alcohol obtained by copolymerizing vinylformamide and vinyl acetate and then saponifying; polymerization degree: 350, saponification degree: 98.5 mol%, content of primary amino groups: 1.5mol%, PVA-7) at 20˚C using a homomixer. The emulsion was evaluated in the same way as in Example 1, and the results are collectively shown in Table 1.

Comparative Example 9

Water (100 g) was added to 5 g of primary amino group-containing PVA (polymerization degree: 1000, saponification degree: 97 mol%, content of primary amino groups: 2.1 mol%, polyvinyl alcohol obtained by copolymerizing vinylformamide and vinyl acetate and then saponifying, PVA-8), and PVA was heated and dissolved at 95˚C. The PVA aqueous solution was placed in a pressure resistant autoclave, 100 g of vinyl acetate was added followed by performing nitrogen substitution, and ethylene was pressed into the autoclave up to 40 kg/cm$^2$. Then, an inner temperature was raised to 60˚C, and an aqueous solution of 1% V-50 (manufactured by Wako Pure Chemical Industries Ltd.) [2,2'-azobis (2-methylpropioneamidine)dihydrochloride] was sequentially added to perform the copolymerization. The copolymerization was completed in 3 hours to afford vinyl acetate-ethylene copolymer emulsion having a solid content concentration of 53.0% and a viscosity of 1120 mPa·s. Ethylene glycol glycidyl ether (5 g) was added to 100 g of the emulsion to prepare an aqueous emulsion composition. This was evaluated in the same way as in Example 1, and the results are collectively shown in Table 1.

Example 1-1

Into a 2-liter glass polymerization vessel equipped with a reflux condenser, a thermometer and a nitrogen inlet port, 900 g of ion-exchanged water and 100 g of PVA-1 (polymerization degree: 1700, saponification degree: 98.5 mol%, PVA-117 manufactured by Kuraray Co., Ltd.) (B) were placed and completely dissolved at 95˚C. Then, this PVA aqueous solution was cooled followed by performing nitrogen substitution, and after adjusting to 60˚C, 25 g of glycidyl methacrylate (A) and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion of a resin with 11. 96% solid content (polymerization rate of glycidyl methacrylate: 99.7%) was obtained. Using the resulting aqueous dispersion, thermal recording paper was made by the following methods.

> (1) Preparation of coating solution (dispersion of thermal dye and developer)
> The following compositions A and B were separately weighed and taken in a sand grinder (batch-type desktop sand grinder manufactured by Kansai Paint Co., Ltd.), and 300 cc of glass beads (soda quartz glass with a diameter of 0.5 mm) were added to disperse at high rotation frequency (2000 rpm) over 5 hours.
>
> A. Thermal dye dispersion
> Leuco dye (brand name: S-205 manufactured by Yamada Chemical Co., Ltd.): 20 g
> Aqueous dispersion obtained above: 20 g
> Ion-exchanged water: 59.9 g
> Anti-foaming agent (brand name: Surfynol 440 manufactured by Nissin Chemical Industry Co., Ltd.): 0.1 g
> B. Developer dispersion
> Bisphenol A: 20 g
> Aqueous dispersion obtained above: 20 g
> Ion-exchanged water: 59.9 g
> Anti-foaming agent (brand name: Surfynol 440 manufactured by Nissin Chemical Industry Co., Ltd.): 0.1 g

Subsequently, the following composition C was dispersed for 2 minutes using a homogenizer (10000 rpm).

> C. Pigment dispersion
> Stearic acid amide 10% calcium carbonate: 20 g
> Aqueous dispersion obtained above: 15 g
> Ion-exchanged water: 65 g
> The coating solution was prepared by combining 10 g of A, 40 g of B and 20 g of C obtained above.
>
> (2) Production of thermal recording paper
> The coating solution (6 g/m$^2$ in terms of solid content) obtained above was applied on the surface of base paper (high quality paper with weighing: 52 g/m$^2$) using a wire bar coater, and subsequently dried at 20˚C for one hour to produce the thermal recording paper. Humidity conditioning at 20˚C and 65% RH for 72 hours was given to the resulting thermal recording paper, and then its performance was evaluated by the following method
>
> (1). The results are shown in Table 2.
> Also, physical properties of the aqueous dispersion were evaluated by the methods (2) to (5). The results are collectively shown in Table 2.

(1) Water resistance of paper

- Wet rub method: About 0.1 mL of ion-exchanged water was dripped on the surface of the coated paper, which was then rubbed with a fingertip, and the water resistance was determined by observing an elution of the coating composition. Determination criteria are as follows.

> 5: Not slippery (excellent water resistance)
> 4: Slippery
> 3: Partially emulsified
> 2: Re-emulsification
> 1: Redissolution (no water resistance)

- Wet picking method: The coated surface was wetted with water using an RI testing machine (manufactured by Akira Seisakusho), subsequently, printing was performed and the water resistance was determined by observing occurrence of picking. Determination criteria are as follows.

> 5: There is almost no occurrence of picking (excellent water resistance).
> 4: There are occurrences of picking to some extent.
> 3: There are many occurrences of picking.
> 2: There are very many occurrences of picking.
> 1: The occurrences of picking are remarkable (no water resistance).

(2) Coloration
The aqueous dispersion was flow-cast on the PET film at 20°C and 65% RH, and dried for 7 days to afford a dried coating film with a thickness of 1000 $\mu$m. The coloration of the coating film was visually evaluated by the following criteria.
○: Transparence, Δ: Slight yellow, and ×: Yellow

Example 1-2

An aqueous dispersion with 11.95% solid content was obtained in the same way as in Example 1-1 except that PVA-2 (polymerization degree: 1700, saponification degree: 98 mol%, ethylene content: 5 mol%) was used in place of PVA-1 used in Example 1-1, and a coating solution was prepared. The evaluation results are collectively shown in Table 2.

Example 1-3

An aqueous dispersion with 11.9% solid content was obtained in the same way as in Example 1-1 except that PVA-3 (polymerization degree: 1000, saponification degree: 99.2 mol%, ethylene content: 7 mol%) was used in place of PVA-1 used in Example 1-1, and a coating solution was prepared. The evaluation results are collectively shown in Table 2.

Comparative Example 1-1

Using an aqueous solution of 12% PVA-1 used in Example 1-1, a coating solution was prepared in the same way as in Example 1-1. The evaluation results are collectively shown in Table 2.

Comparative Example 1-2

Using an aqueous solution of 12% PVA-3 used in Example 1-3, a coating solution was prepared in the same way as in Example 1-1. The evaluation results are collectively shown in Table 2.

Example 1-4

Into a 2-liter glass polymerization vessel equipped with a reflux condenser, a thermometer and a nitrogen inlet port, 900 g of ion-exchanged water and 100 g of PVA-4 (polymerization degree: 1700, saponification degree: 88 mol%, PVA-217 manufactured by Kuraray Co., Ltd.) (B) were placed and completely dissolved at 95˚C. Then, this PVA aqueous solution was cooled followed by performing nitrogen substitution, and after adjusting to 60˚C, 50 g of glycidyl methacrylate (A) and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 14.8% solid content was obtained. A coating solution was prepared in the same way as in Example 1-1. The evaluation results are collectively shown in Table 2.

Example 1-5

Into a 2-liter glass polymerization vessel equipped with a reflux condenser, a thermometer and a nitrogen inlet port, 1850 g of ion-exchanged water and 100 g of PVA-4 (B) were placed and completely dissolved at 95˚C. Then, this PVA aqueous solution was cooled followed by performing nitrogen substitution, and after adjusting to 60˚C, 150 g of glycidyl methacrylate (A) and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 12.5% solid content was obtained. A coating solution was prepared in the same way as in Example 1-1. The evaluation results are collectively shown in Table 2.

Comparative Example 1-3

Into a 2-liter glass polymerization vessel equipped with a reflux condenser, a thermometer and a nitrogen inlet port, 2900 g of ion-exchanged water and 100 g of PVA-4 (B) were placed and completely dissolved at 95˚C. Then, this PVA aqueous solution was cooled followed by performing nitrogen substitution, and after adjusting to 60˚C, 500 g of glycidyl methacrylate (A) and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 19.7% solid content was obtained. A coating solution was prepared in the same way as in Example 1-1. The evaluation results are collectively shown in Table 2.

Comparative Example 1-4

Into a 2-liter glass polymerization vessel equipped with a reflux condenser, a thermometer and a nitrogen inlet port, 2250 g of ion-exchanged water and 100 g of PVA-1 (B) were placed and completely dissolved at 95˚C. Then, this PVA aqueous solution was cooled followed by performing nitrogen substitution, and after adjusting to 60˚C, 250 g of glycidyl methacrylate (A) and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 14.6% solid content was obtained. A coating solution was prepared in the same way as in Example 1-1. The evaluation results are collectively shown in Table 2.

Comparative Example 1-5

Into a 2-liter glass polymerization vessel equipped with a reflux condenser, a thermometer and a nitrogen inlet port, 2900 g of ion-exchanged water and 100 g of PVA-4 (B) were placed and completely dissolved at 95˚C. Then, this PVA aqueous solution was cooled followed by performing nitrogen substitution, and after adjusting to 60˚C, 500 g of glycidyl methacrylate (A), 2.5 g of lauryl mercaptan and 5 g of an aqueous solution of 10% sodium tartrate were added thereto while stirring at 130 rpm. Subsequently, 50 g of 0.5% hydrogen peroxide solution was continuously dripped over 3 hours to perform emulsion polymerization. After 3 hours, an aqueous dispersion with 19.6% solid content was obtained. A coating solution was obtained in the same way as in Example 1-1 except that 100 g of an aqueous solution of 20% tartaric acid as a water resistant additive was added to 100 g solid content of the resulting aqueous dispersion. The results are collectively shown in Table 2.

Example 1-6

The evaluation was performed in the same way as in Example 1-4 except that the same amount of ethylenediamine was used in place of tartaric acid used in Example 1-4. The results are collectively shown in Table 2.

Comparative Example 1-6

Into a reaction vessel equipped with a stirrer, a reflux condenser, a nitrogen introducing pipe and a thermometer, 405 g of a vinyl acetate monomer, 11 g of allyl glycidyl ether and 30 g of methanol were placed, and the vessel was deaerated by bubbling with nitrogen for 15 minutes. Separately, an initiator solution in which 4.5 parts of 2,2'-azobisisobutylonitrile had been dissolved in 15 g of methanol was prepared followed by performing nitrogen substitution by bubbling with nitrogen. The temperature in the reaction vessel was raised, and when an inner temperature reached 60˚C, the polymerization was started by adding the initiator solution separately prepared. The polymerization was performed at 60˚C for 4 hours, and stopped by cooling. At that time, a solid content concentration was 54.8%. Subsequently, unreacted vinyl acetate monomer was removed by adding methanol at intervals at 30˚C under reduced pressure to afford a methanol solution of a polyvinyl acetate copolymer (concentration: 44.5%). This copolymer was the polyvinyl acetate copolymer containing 2.1 mol% of an allyl glycidyl ether unit (epoxy group) and having a viscosity average molecular weight of $80 \times 10^3$.

Subsequently, 100 g of the methanol solution of the polyvinyl acetate copolymer (concentration 44.5%) having the epoxy group obtained above was weighed and taken into a reaction vessel equipped with a stirrer, a reflux condenser, a nitrogen introducing pipe and a thermometer, nitrogen gas was bubbled for 15 minutes, and then a solution in which 12 g of cysteine and 0.2 g of sodium hydroxide had been dissolved in 48 g of methanol was added thereto. The mixture was reacted at 50˚C for 2 hours while stirring, then the temperature was cooled to 40˚C, and 65 g of a methanol solution of 10% sodium hydroxide was added to saponify. After leaving as it is at 40˚C for 5 hours, the mixture was pulverized, and neutralized by adding 8 g of acetic acid. Soxhlet extraction with methanol was performed for 48 hours, and the extract was dried at 60˚C for 20 hours or more to yield amino acid group-containing PVA. In the PVA (PVA-9), 2.1 mol% amino acid group was introduced, a vinyl alcohol content was 98 mol% and the polymerization degree was 1000. A coating solution was prepared in the same way as in Example 1-1 except that an aqueous solution of 12% PVA-9 was used and 3.3 g of ethylene glycol diglycidyl ether as the water resistant additive was added to 100 g of the solid content of PVA-9. The evaluation results are collectively shown in Table 2.

Example 1-7

The aqueous dispersion (solid content: 11.96%) obtained in Example 1-1 was sprayed and dried in hot air at 120˚C to afford resin powder with an average particle diameter of 20 $\mu$m. The resulting resin powder was redispersed by adding ion-exchanged water to prepare a dispersion at a concentration of 12%. The dispersion was evaluated in the same way as in Example 1-1. The results are collectively shown in Table 2.

Table 1

| | Aqueous dispersion (a) | | | | | | | | Water resistant additive (b) | Coating film water resistance | | Storage stability | Transparency |
|---|---|---|---|---|---|---|---|---|---|---|---|---|---|
| | (B) | Polymerization degree | Saponification degree (mol%) | Ethylene (mol%) | 1,2-Glycol (mol%) | (A)/(B) | Particle diameter (nm) | Binding percentage of (A) | | Water absorption rate (%) | Elution rate (%) | | |
| Example 1 | PVA-1 | 1700 | 98.5 | - | 1.6 | 25/100 | 120 | 92 | - | 250 | 9.6 | o | o |
| Example 2 | PVA-2 | 1700 | 98 | 5 | 1.5 | 25/100 | 110 | 94 | - | 160 | 6.7 | o | o |
| Example 3 | PVA-3 | 1000 | 99.2 | 7 | 1.5 | 25/100 | 170 | 90 | - | 98 | 2.8 | o | o |
| Comparative Example 1 | PVA-1 | 1700 | 98.5 | - | 1.6 | 0/100 | - | - | - | 3400 | 75 | o | o |
| Comparative Example 2 | PVA-3 | 1000 | 99.2 | 7 | 1.6 | 0/100 | - | - | - | 250 | 11.2 | x | o |
| Example 4 | PVA-4 | 1700 | 88 | - | 1.6 | 50/100 | 90 | 95 | Tartaric acid | 360 | 16.4 | o | o |
| Example 5 | PVA-4 | 1700 | 88 | - | 1.6 | 150/100 | 230 | 78 | Tartaric acid | 380 | 17.1 | o | o |
| Comparative Example 3 | PVA-4 | 1700 | 88 | - | 1.6 | 500/100 | 550 | 45 | Tartaric acid | 510 | 34 | Δ | o |
| Comparative Example 4 | PVA-1 | 1700 | 98.5 | - | 1.6 | 250/100 | 540 | 55 | Tartaric acid | 480 | 32 | Δ | o |
| Comparative Example 5 | PVA-4 | 1700 | 88 | - | 1.6 | 500/100 | 450 | 30 | Tartaric acid | 1580 | 54 | Δ | o |
| Example 6 | PVA-4 | 1700 | 88 | - | 1.6 | 50/100 | 90 | 95 | Ethylenediamine | 350 | 14.5 | Δ | o |
| Example 7 | PVA-5 | 1700 | 98 | - | 2.2 | 50/100 | 70 | 98 | Tartaric acid | 270 | 8 | o | o |
| Example 8 | PVA-1 | 1700 | 98.5 | - | 1.6 | 25/100 | 120 | 92 | - | 260 | 10 | o | o |
| Comparative Example 6 | PVA-6 PVA-4 | 500 1700 | 88 88 | - | 1.6 | 41.7/100 | 1500 | 2 | - | 500 | 20 | Δ | x |
| Comparative Example 7 | PVA-4 | 1700 | 88 | - | 1.6 | 58.8/100 | 1600 | 3 | - | 550 | 23 | Δ | x |
| Comparative Example 8 | PVA-7 | 350 | 98.5 | - | 1.6 | 2000/100 | 2300 | 1 | - | 270 | 13 | Δ | x |
| Comparative Example 9 | PVA-8 | 1000 | 97 | - | 1.6 | 235/100 | 1600 | 1 | - | 350 | 15 | x | x |

Table 2

| | | Aqueous dispersion (a) | | | | | | Water resistant additive (b) | Water resistance of paper | | Storage stability | Coloration |
|---|---|---|---|---|---|---|---|---|---|---|---|---|
| | (B) | Polymerization degree | Saponification degree (mol%) | Ethylene (mol%) | (A)/(B) | Particle diameter (nm) | Binding percentage of (A) | | Wet rub | Wet picking | | |
| Example 1-1 | PVA-1 | 1700 | 98.5 | - | 25/100 | 120 | 92 | - | 5 | 5 | o | o |
| Example 1-2 | PVA-2 | 1700 | 98 | 5 | 25/100 | 110 | 94 | - | 5 | 5 | o | o |
| Example 1-3 | PVA-3 | 1000 | 99.2 | 7 | 25/100 | 170 | 90 | - | 5 | 5 | o | o |
| Comparative Example 1-1 | PVA-1 | 1700 | 98.5 | - | 0/100 | - | - | - | 2 | 2 | o | o |
| Comparative Example 1-2 | PVA-3 | 1000 | 99.2 | 7 | 0/100 | - | - | - | 3 | 3 | x | o |
| Example 1-4 | PVA-4 | 1700 | 88 | - | 50/100 | 90 | 95 | Tartaric acid | 4 | 4 | o | o |
| Example 1-5 | PVA-4 | 1700 | 88 | - | 150/100 | 230 | 78 | Tartaric acid | 5 | 4 | o | o |
| Comparative Example 1-3 | PVA-4 | 1700 | 88 | - | 500/100 | 550 | 45 | Tartaric acid | 5 | 3 | Δ | o |
| Comparative Example 1-4 | PVA-1 | 1700 | 98.5 | - | 250/100 | 540 | 55 | Tartaric acid | 5 | 3 | Δ | o |
| Comparative Example 1-5 | PVA-4 | 1700 | 88 | - | 500/100 | 450 | 30 | Tartaric acid | 3 | 2 | Δ | o |
| Example 1-6 | PVA-4 | 1700 | 88 | - | 50/100 | 90 | 95 | Ethylenediamine | 5 | 5 | Δ | o |
| Comparative Example 1-6 | PVA-9 | 1000 | 98 | - | 0/100 | - | - | Epoxy compound | 5 | 5 | x | Δ |
| Example 1-7 | PVA-1 | 1700 | 98.5 | - | 25/100 | 120 | 92 | - | 5 | 5 | o | o |

Industrial Applicability

The aqueous dispersion and the composition of the present invention form coating films excellent in water resistance and transparency even when dried at room temperature, and simultaneously are extremely excellent in storage stability. Therefore, they are useful as coating agents for paper, e.g., pigment coating agents for paper, surface coating agents for paper, coating agents for inkjet paper and coating agents for thermosensitive paper. In particular, they are extremely useful as overcoating agents for paper, especially, overcoating agents for thermosensitive paper to which no thermal treatment at high temperature can be given.

The aqueous dispersion and the composition of the present invention are effectively used for adhesives for inorganic or organic matters such as adhesives for plywood secondary processing, binders for ceramics, dispersants for pigment dispersion, polymerization stabilizers for crosslinking emulsions, image forming materials such as gelatin blends and photosensitive resins, substrates for hydrogel such as bacterial cell fixing gel and enzyme fixing gel, vehicles for painting, treating agents for inorganic materials and organic materials, e.g., surface coating agents. They can broadly be used for applications for which conventional water soluble resins have been used, and further used for molded articles such as films, sheets and fibers.

**Claims**

1. An aqueous dispersion of a resin composed of a polymer containing at least 20 weight% of a vinyl monomer unit (A) having an epoxy group and a vinyl alcohol based polymer (B), wherein a weight ratio (A) / (B) is 2/100 to 200/100, a weight percentage of (A) bound to (B) is 50% or more based on a total weight of (A) and an average particle diameter measured by a dynamic light scattering method is 500 nm or less.

2. The aqueous dispersion according to Claim 1, wherein the vinyl alcohol based polymer (B) contains 1 to 20 mol% α-olefin unit having 4 or less carbons in a molecule and has a saponification degree of 80 mol% or more.

3. The aqueous dispersion according to Claim 2, wherein the α-olefin unit is an ethylene unit.

4. The aqueous dispersion according to Claim 1 , wherein the vinyl alcohol based polymer (B) contains 1.9 mol% or more 1,2-glycol bonds and has a saponification degree of 70 mol% or more.

5. The aqueous dispersion according to Claim 1, wherein the vinyl alcohol based polymer (B) contains 1 to 20 mol% α-olefin unit having 4 or less carbons in a molecule and contains (1.7 - X/40) to 4 mol% 1,2-glycol bonds when a content of the α-olefin unit is X mol%.

6. A composition obtained by combining a water resistant additive (b) with the aqueous dispersion (a) according to Claim 1.

7. The composition according to Claim 6, wherein the water resistant additive (b) is polyvalent carboxylic acid.

8. Resin powder obtained by drying the aqueous dispersion according to Claim 1 or a composition thereof.

9. A coating agent for paper composed of the aqueous dispersion according to Claim 1 or an aqueous redispersion of resin powder obtained by drying the aqueous dispersion.

10. A coating agent for thermosensitive paper composed of the aqueous dispersion according to Claim 1 or an aqueous redispersion of resin powder obtained by drying the aqueous dispersion.

**EP 1 754 751 A1**

## INTERNATIONAL SEARCH REPORT

| | International application No. |
|---|---|
| | PCT/JP2005/008885 |

**A. CLASSIFICATION OF SUBJECT MATTER**
Int.Cl⁷ C08L29/04, C08K5/092, C08L57/10

According to International Patent Classification (IPC) or to both national classification and IPC

**B. FIELDS SEARCHED**

Minimum documentation searched (classification system followed by classification symbols)
Int.Cl⁷ C08L29/00-29/14, C08K5/092, C08L57/10

Documentation searched other than minimum documentation to the extent that such documents are included in the fields searched
Jitsuyo Shinan Koho 1922-1996 Jitsuyo Shinan Toroku Koho 1996-2005
Kokai Jitsuyo Shinan Koho 1971-2005 Toroku Jitsuyo Shinan Koho 1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-138095 A (Kuraray Co., Ltd.), 14 May, 2003 (14.05.03), (Family: none) | 1-10 |
| A | JP 2001-234018 A (Kuraray Co., Ltd.), 28 August, 2001 (28.08.01), (Family: none) | 1-10 |
| A | JP 2004-131720 A (Kuraray Co., Ltd.), 30 April, 2004 (30.04.04), & EP 1400557 A1 & KR 2004-25576 A | 1-10 |
| A | JP 2001-40231 A (Kuraray Co., Ltd.), 13 February, 2001 (13.02.01), (Family: none) | 1-10 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 August, 2005 (05.08.05) | 23 August, 2005 (23.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

19

| INTERNATIONAL SEARCH REPORT | International application No. |
|---|---|
| | PCT/JP2005/008885 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-88214 A  (Yunichika Chemical Kabushiki Kaisha), 27 March, 2002 (27.03.02), (Family: none) | 1-10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0848958 B
- JP H1036801 A
- JP 2000239350 A
- JP 2000290538 A
- JP H10219068 A
- JP 63112794 A
- JP 63085198 A
- JP H10251992 A
- JP 2003253592 A